# FASCICULE DE BREVET EUROPEEN

(11) **EP 2 185 825 B1**
(45) Date de publication et mention de la délivrance du brevet: **20.04.2016**
(21) Numéro de dépôt: 08852542.3
(22) Date de dépôt: 09.09.2008
(51) Int. Cl.: F16B 13/00

(54) **PIECE DE FIXATION COMPORTANT DES NERVURES ET UNE POINTE EN BISEAU**
BEFESTIGUNGSELEMENT MIT RIPPEN UND KEGELFÖRMIGER SPITZE
FIXING PART COMPRISING RIBS AND A BEVEL TIP

(30) Priorité: 10.09.2007 FR 0706323
(43) Date de publication de la demande: 19.05.2010
(73) Titulaire: Ateliers LR Etanco, 78230 Le Pecq (FR)
(72) Inventeur: LEROY, Alain, F-78820 Juziers (FR)
(74) Mandataire: Mazabraud, Xavier
(86) Numéro de dépôt international: PCT/FR2008/001259
(87) Numéro de publication internationale: WO 2009/066033

(56) Documents cités:
- DE-A1- 3 433 933
- DE-U1- 29 718 100

## Description

La présente invention concerne une pièce de fixation destinée à être utilisée avec une vis, comportant une tête de retenue, qui s'étend sensiblement radialement, par exemple circulaire ou rectangulaire, munie d'un orifice axial, solidaire d'un fût tubulaire débouchant coaxialement audit orifice. Le fût est de forme généralement cylindrique et reçoit la vis utilisée, son diamètre intérieur est au moins égal à celui de la tête de la vis, avec une extrémité en forme de pointe de façon à percer une membrane d'étanchéité et à pénétrer dans une couche d'isolant thermique ou phonique ou autre. Sa surface extérieure et son extrémité pointue sont adaptées de façon à faciliter le perçage de la membrane d'étanchéité et la pénétration de la couche d'isolant.

Elle s'applique notamment, mais non exclusivement, à la fixation sur une structure support de panneaux isolants surmontés d'une membrane d'étanchéité, par exemple en vue de réaliser l'isolation et l'étanchéité d'un toit.

Les toits des bâtiments sont généralement réalisés à l'aide de bandes métalliques nervurées, appelées « bac acier », ou d'autres supports, fixés à la structure du bâtiment, sur lesquelles sont posées une couche d'isolant et une membrane d'étanchéité. La couche d'isolant peut être constituée de tout mauvais conducteur, tel que laine de verre, laine de roche, polystyrène ou autre. Son épaisseur varie selon les applications, elle est généralement comprise entre 40 et 300 mm voire plus. La membrane d'étanchéité peut être constituée d'une couche bitumineuse, d'un film de PVC renforcé ou autre. A cause du vent, il est nécessaire de fixer mécaniquement la couche d'isolant et la membrane d'étanchéité au support. Pour réaliser cette fixation on utilise des éléments de fixation en deux parties, d'une part une pièce de fixation, comportant une tête de retenue et un fût, et d'autre part une vis métallique qui prolonge le fût. Ceci présente l'avantage de limiter la longueur de la vis, mais également de réaliser une rupture de pont thermique car la pièce de fixation est en matériau non métallique, par exemple en matière plastique moulée. La pose de cette membrane ne doit présenter aucun défaut aussi léger soit-il, car la moindre fuite peut avoir à la longue des effets catastrophiques allant jusqu'au remplacement complet de la membrane et de la couche d'isolation, qui est une opération très onéreuse.

La tête de ladite pièce comporte un orifice axial qui communique avec le fût tubulaire, par lequel on peut introduire ladite vis, et l'extrémité en forme de pointe du fût présente un orifice axial par lequel la vis peut sortir partiellement. Au voisinage de l'extrémité en forme de pointe dudit fût, un rétrécissement d'alésage de diamètre inférieur à celui de la tête de la vis forme chanfrein, la tête de ladite vis prenant appui à l'intérieur du fût sur cette partie chanfreinée. D'autre part la surface intérieure du fût comporte des protubérances ou godrons que la tête de la vis peut franchir lorsqu'elle est forcée à l'intérieur du fût mais qu'elle ne peut franchir en sens inverse. Ainsi la tête de la vis est prisonnière à l'intérieur du fût.
La vis peut présenter une extrémité foreuse ou pointue pour percer le support, suivie d'une partie taraudeuse pour créer un filetage. L'ensemble constitue un élément d'appui et/ou de fixation pour la couche d'isolant et la membrane d'étanchéité.

Le processus de fixation sera détaillé ci-après. Quand la couche d'isolation et un lé de membrane d'étanchéité ont été posés, les éléments de fixation, composés chacun d'un ensemble pièce de fixation et vis éventuellement prémontée, sont tout d'abord appuyés fermement sur la membrane d'étanchéité, au voisinage du bord du lé, de façon à la percer ainsi que la couche d'isolant sous-jacente. La vis pénètre sans difficulté mais le fût de la pièce de fixation, d'un diamètre plus important, pénètre plus difficilement pour deux raisons :
- la membrane d'étanchéité est résistante ; le fait de forcer la pièce de fixation au travers de la membrane provoque dans celle-ci de fortes déformations qui se traduisent par des plis ou ondulations permanents au voisinage du trou ainsi réalisé,
- les matériaux isolants utilisés, par exemple le polystyrène, sont de plus en plus denses.

Puis la vis est actionnée à l'aide d'un outil (voir par exemple FR 2 820 668) de façon à engager la vis dans le support et à appliquer la tête de retenue de l'élément de fixation sur la membrane d'étanchéité.

Compte tenu du fait que la surface extérieure du fût est généralement lisse, le couple engendré lors du vissage de la vis tend à entrainer en rotation la pièce de fixation. C'est la raison pour laquelle en vue d'éviter cette rotation on a prévu (cf Brevet DE 34 33 933 A1) de réaliser des fûts munis de cannelures axiales anti-rotation.

Une fois tous les éléments de fixation fixés sur le bord d'un lé de membrane, l'étape suivante consiste à poser le lé suivant en recouvrement du lé précédent, puis à souder le bord du nouveau lé sur le lé précédent, de façon à recouvrir les têtes des éléments de fixation et à les isoler des intempéries. Or les plis et ondulations générés par le forçage du fût au travers de la membrane rendent délicate et aléatoire cette étape de soudage.

L'invention a donc plus particulièrement pur but de supprimer ces inconvénients tout en évitant la rotation des pièces de fixation et en facilitant la pénétration des éléments de fixation de manière à apporter plus de confort à l'opérateur et offrir une meilleure garantie de qualité de la pose de la couche d'isolant et de la membrane d'étanchéité.

A cet effet elle propose une pièce de fixation destinée à être utilisée avec une vis, cette pièce comportant une tête de retenue qui s'étend sensiblement radialement et munie d'un orifice axial, ladite tête de retenue étant solidaire d'un fût tubulaire de forme sensiblement cylindrique débouchant coaxialement audit orifice, de diamètre intérieur au moins égal à celui de la tête de la vis utilisée, ledit fût présentant à une extrémité une forme en pointe qui comprend à proximité de sa pointe un rétrécissement d'alésage de diamètre inférieur à celui de la tête de la vis par lequel peut passer la tige de la vis. Selon l'invention, la forme en pointe du fût est taillée en forme de biseau et présente donc une surface biseautée bordée par deux arrêtes tranchantes convergeant vers un point de convergence situé sur l'extrémité de la forme en pointe du fût et en ce que ledit fût comporte sur sa paroi extérieure une nervure saillante principale qui s'étend depuis la tête de retenue jusqu'au point de convergence des deux dites arêtes.

Les pièces de fixation selon l'invention peuvent en outre comporter d'autres nervures saillantes, appelées nervures secondaires, en nombre différent selon le mode de réalisation, qui ne s'étendent pas jusqu'au voisinage de l'extrémité pointue du fût. L'effet de ces nervures secondaires est de provoquer de petites coupures dans la membrane d'étanchéité au bord de la fente que réalisent les arêtes tranchantes de ladite pièce lorsqu'elles percent la membrane. Le perçage est ainsi facilité et on évite de provoquer dans la membrane des déformations ou des plis qui gêneraient la soudure du lé suivant. Il n'est plus nécessaire que la vis soit pré-montée dans la pièce de fixation et la précède dans le perçage de la membrane d'étanchéité.

Par ailleurs, un bénéfice supplémentaire obtenu principalement grâce à la nervure principale est bien sûr une meilleure rigidité du fût, permettant par exemple de diminuer l'épaisseur de sa paroi.

La forme de la surface biseautée peut être quelconque, pourvu qu'elle soit globalement suffisamment inclinée par rapport à l'axe du fût pour former un biseau. Les deux arrêtes qui délimitent ladite surface forment un taillant qui provoque une coupe franche dans la membrane d'étanchéité lorsque ladite pièce est appliquée.

Grâce à ces deux particularités, la pièce de fixation selon l'invention perce la membrane d'étanchéité et pénètre dans la couche d'isolant thermique sans difficulté. La pression à exercer par l'opérateur est moindre que pour les pièces de fixation de l'état de l'art et la membrane d'étanchéité, ayant subi une moindre déformation, ne présente pas de pli ou de déformation permanente qui gênerait la soudure du lé suivant.

Un mode de réalisation et des variantes seront décrits ci-après, à titre d'exemples non limitatifs, avec référence aux dessins annexés dans lesquels :
La figure 1 est une vue en perspective d'un élément de fixation de l'état de l'art, avec la vis pré-montée ;
La figure 2 est une vue en coupe du même élément de fixation de l'état de l'art ;
La figure 3 est une vue en perspective d'une pièce de fixation selon l'invention ;
La figure 4 représente une section transversale d'une pièce de fixation selon l'invention ;
La figure 5 est une vue par l'extrémité de la pièce de fixation selon l'invention ;
La figure 6 est une vue latérale montrant une variante de pièce de fixation selon l'invention ;
La figure 7 est une vue latérale de l'extrémité en forme de pointe d'une variante de pièce de fixation selon l'invention ;
Les figures 8 et 9 sont des vues latérales de l'extrémité en forme de pointe de deux variantes respectives de pièce de fixation selon l'invention.

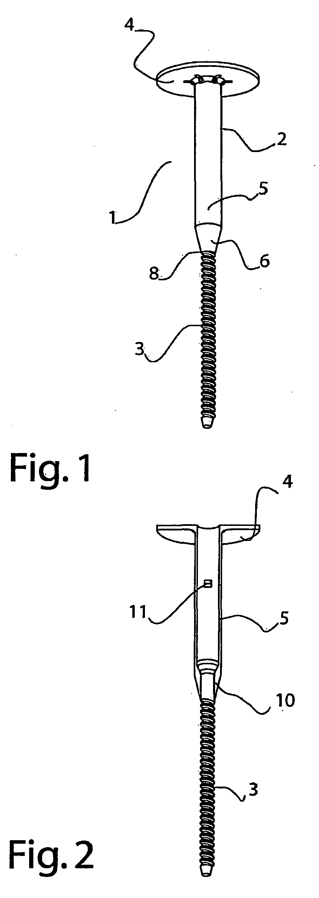

La figure 1 représente un élément de fixation 1 de l'état de l'art, composé d'une pièce de fixation 2 et d'une vis pré-montée 3. La pièce de fixation 2 comporte une tête de retenue 4 circulaire et un fût 5 cylindrique dont la surface extérieure est lisse. Sa longueur est comprise entre 50 et 150 mm et le fût 5 a un diamètre d'environ 12 mm. Elle comporte une extrémité 6 en forme de pointe conique qui comporte une ouverture 8 par laquelle la vis de fixation 2 sort partiellement.

La figure 2 montre que la tête de la vis est prisonnière à l'intérieur du fût 5 à cause de la présence d'une part d'un chanfrein 10 situé au voisinage de l'extrémité du fût en forme de pointe, d'autre part d'excroissances ou godrons 11 disposés sur la surface intérieur du fût.

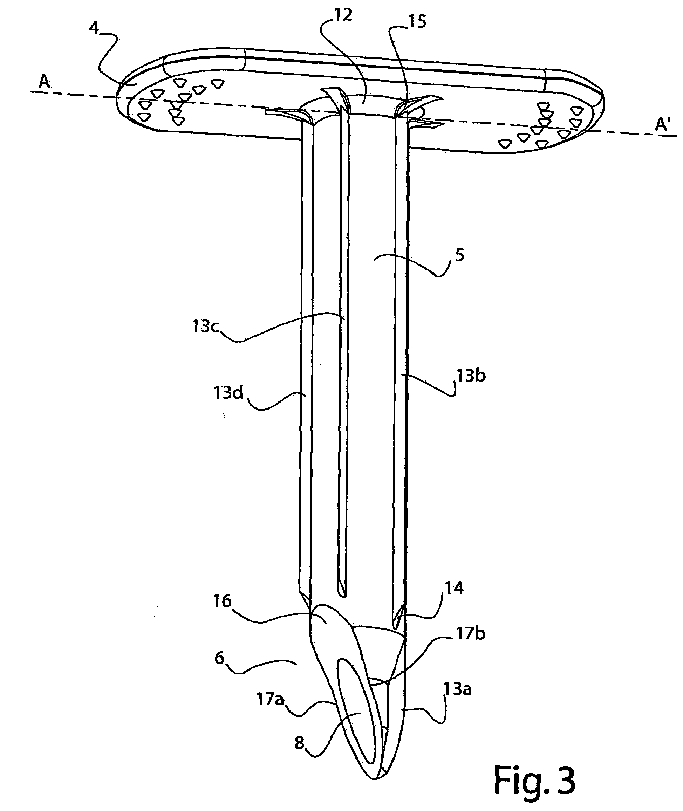

La figure 3 présente un mode de réalisation particulier de la pièce de fixation selon l'invention, sans vis. La tête de retenue 4 est de forme rectangulaire de grand axe A-A', à coins arrondis, mais elle peut être de forme circulaire ou de toute autre forme.

Le fût 5 de forme cylindrique est solidaire de la tête 4 par l'intermédiaire d'un arrondi 12. La pièce de fixation existe selon plusieurs longueurs de fût, la pièce utilisée dépendant de l'épaisseur de la couche d'isolant à fixer. La vis (non représentée) destinée à être utilisée avec la pièce de fixation pénètre par une ouverture dans la tête de retenue (non visible) et sort partiellement du fût par l'ouverture 8 à l'extrémité 6 du fût. Les mêmes dispositifs que dans l'état de l'art représenté en figure 2 emprisonnent la tête de la vis à l'intérieur du fût, ce qui est utile quand on utilise la pièce de fixation avec une vis pré-montée pour percer la membrane d'étanchéité. Cependant la pièce de fixation selon l'invention peut percer la membrane d'étanchéité sans vis, celle-ci étant mise en place dans le fût et vissée ultérieurement.

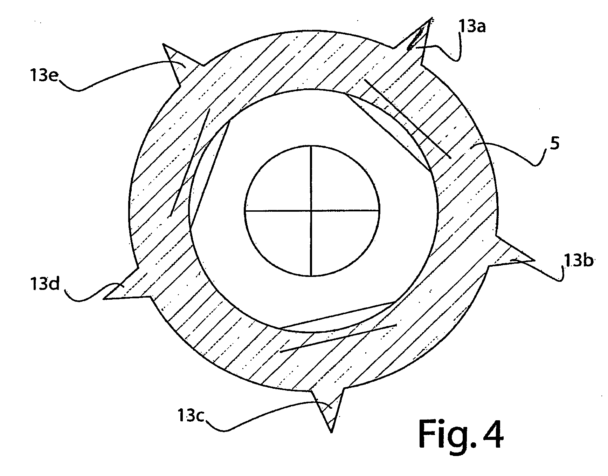

Le fût 5 présente sur sa surface extérieure cinq nervures saillantes, une nervure principale 13a à arête tranchante et 4 nervures secondaires 13b, 13c, 13d et 13e dont seulement quatre sont visibles sur la figure 3. Elles sont mieux visibles sur la figure 4 qui représente une coupe du fût 5 selon un plan perpendiculaire à l'axe du fût. Conformément à l'invention, la nervure principale 13a s'étend depuis la tête 4 et se prolonge jusqu'à l'extrémité de la pièce de fixation en forme de biseau de façon à la rigidifier. D'autres variantes de réalisation de la pièce de fixation selon l'invention peuvent comporter un nombre total de nervures différent de cinq, par exemple trois, quatre, six ou plus. Dans un mode de réalisation préféré, le nombre de nervures est un nombre impair de façon à ce que chaque nervure ne soit pas à l'opposé d'une autre nervure par rapport à l'axe du fût. Les nervures saillantes secondaires (13b, 13c, 13d, 13e) pourront être réparties symétriquement par rapport à un plan passant par l'axe du fût (5) et la nervure principale (13a).

Les nervures représentées en figure 3 sont rectilignes et disposées selon les génératrices du fût, mais elles peuvent être d'une autre forme, par exemple hélicoïdales avec un pas suffisamment grand pour que la pièce de fixation puisse pénétrer facilement dans la couche d'isolant. Elles peuvent être disposées dans le sens de vissage de la vis ou dans le sens inverse.

Les nervures de la figure 4 possèdent une section triangulaire de manière à présenter une arête tranchante, mais d'autres formes sont possibles, l'important étant que lesdites nervures soient tranchantes et suffisamment en saillie par rapport à la surface extérieure du fût pour provoquer de petites coupures dans la membrane d'étanchéité lorsque la pièce de fixation perce ladite membrane.

Comme il est visible sur la figure 3, la hauteur de chaque nervure par rapport à l'axe du fût diminue graduellement à leur extrémité 14 située au voisinage de l'extrémité du fût 5 jusqu'à se fondre dans la surface extérieure du fût, ceci afin d'éviter d'exercer des efforts de coupure trop importants sur la membrane d'étanchéité lors de la pénétration. A leur autre extrémité proche de la tête de retenue 4, les nervures 13 à 13e se prolongent par des renforts 15 qui prennent appui sur l'arrondi 12 et la tête de retenue 4.

Dans une variante de l'invention, la hauteur de la nervure principale 13a par rapport à l'axe du fût reste constante ; celle-ci se prolonge donc vers l'extrémité en forme de biseau de la pièce de fixation jusqu'à intersecter la surface biseautée 16.

Les nervures secondaires 13b, 13c, 13d et 13e peuvent avoir la même longueur mais dans un mode de réalisation préféré, leurs longueurs peuvent être toutes différentes, les écarts de longueur entre deux nervures secondaires étant par exemple de 2 mm.

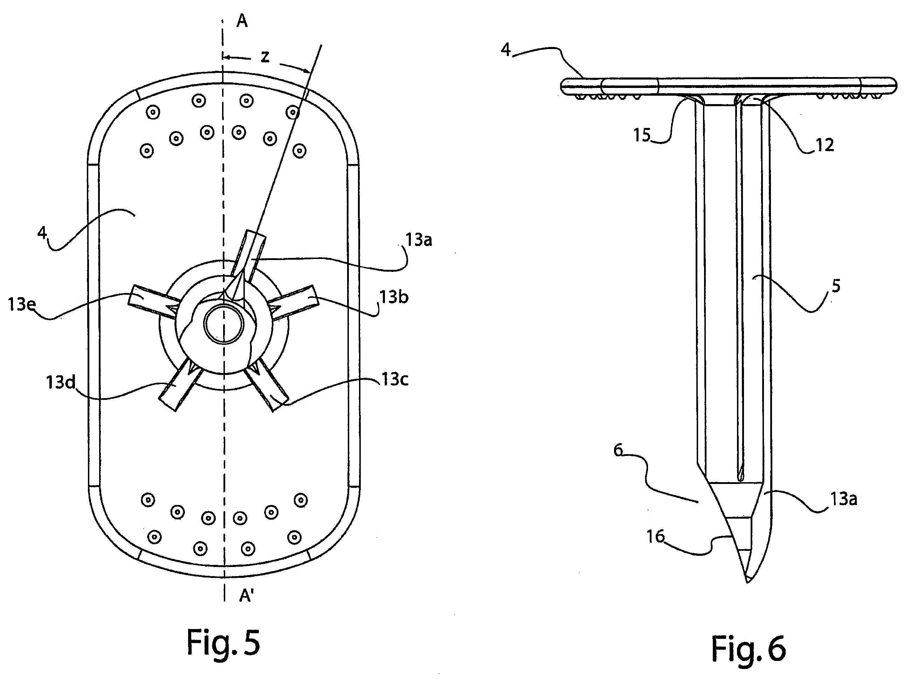

Les nervures représentées en figure 3 sont réparties régulièrement le long de la circonférence du fût 5. Cependant cette régularité dans la disposition des nervures et donc dans les petites coupures dans la membrane peut être source de difficultés. En effet, les membranes en PVC renforcé comportent généralement une trame de fibres, qui elle-même peut être disposée selon les directions principales du lé de membrane, longueur et largeur, ou bien à 45° de ces directions. Or lorsque la tête de retenue 4 présente un grand axe A-A', comme représenté en figures 3 et 5, les pièces de fixation sont toutes posées avec leur grand axe A-A' parallèle au bord du lé. Dans ce cas, il faut éviter que les petites coupures provoquées par le perçage de la pièce de fixation dans la membrane soient systématiquement alignées par rapport à la trame de la membrane, se qui se traduirait potentiellement par une/des lignes de coupure lorsqu'une pluralité de pièces sont posées côte à côte et dans la même orientation. Lorsqu'on utilise des pièces de fixation à tête ronde, ce risque est moindre car leur orientation à la pose est aléatoire.

Il convient donc, lorsque la tête de la pièce de fixation comporte un grand axe A-A', de disposer les nervures sur les fûts des pièces de fixation de façon qu'elles ne tombent pas dans le sens des fibres une fois les pièces de fixation posées.

En conséquence, dans le mode de réalisation préféré représenté en figure 5, lorsque la tête de retenue 4 présente un grand axe A-A', la nervure principale 13a est décalée d'un angle Z inférieur à 90°, de préférence environ 20°, par rapport audit grand axe A-A' de la tête de retenue. Si on appelle N le nombre total de nervures saillantes, les N-1 nervures secondaires sont disposées à environ 2π/N, 4π/N... 2*(N-1) π/N par rapport audit grand axe A-A'.

Sur la figure 3, l'extrémité 6 du fût présente une portion en forme de biseau formé par une surface plane 16 intersectant la paroi du fût et délimitant deux arrêtes 17a et 17b formant tranchant. Ces arrêtes tranchantes contribuent à diminuer la pression à exercer par l'opérateur sur la pièce quand il cherche à percer la membrane d'étanchéité. La nervure principale 13a se trouve dans un plan axial perpendiculaire à ladite surface.

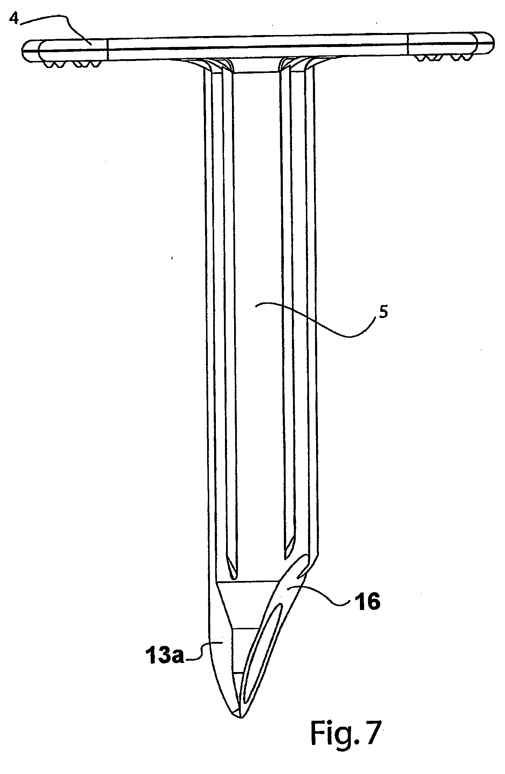

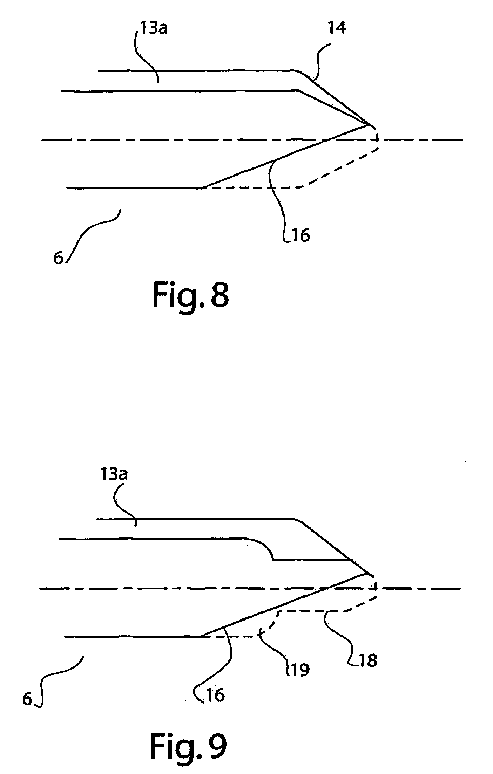

Selon d'autres variantes, la surface 16 peut être concave, comme représenté en figure 6, ou hélicoïdale comme représenté en figure 7, ou autre.
L'extrémité pointue du fût 5 peut prendre différentes formes. Elle peut par exemple être conique, comme représenté en figure 8, ou présenter une portion terminale cylindrique de fût de diamètre extérieur plus faible 18 et reliée au fût 5 par un épaulement 19, comme représenté en figure 9. Dans tous les cas, il est important que la nervure principale 13a se prolonge jusqu'à l'extrémité de la pointe 6 de façon à rigidifier cette dernière.

Avantageusement, les deux nervures saillantes secondaires (13e, 13b) seront situées dans le prolongement des arêtes (17a, 17b) bordant la surface bisautée 16.

## Revendications

1. Rallonge destinée à être utilisée avec une vis, comportant une tête de retenue (4) qui s'étend sensiblement radialement et munie d'un orifice axial, ladite tête de retenue (4) étant solidaire d'un fût tubulaire (5) de forme sensiblement cylindrique débouchant coaxialement audit orifice, ledit fût (5) présentant à une extrémité (6) une forme en pointe qui comprend à proximité de sa pointe un rétrécissement d'alésage,
la forme en pointe du fût étant taillée en forme de biseau et présentant une surface (16) biseautée bordée par deux arrêtes tranchantes (17a, 17b) convergeant vers un point de convergence situé sur l'extrémité de la forme en pointe du fût (5),
**caractérisée en ce que** ledit fût comporte en outre sur sa paroi extérieure :
- une nervure saillante principale (13a) qui s'étend depuis la tête de retenue (4) jusqu'au point de convergence des deux arêtes (17a, 17b),
- au moins une nervure saillante secondaire (13b, 13c, 13d, 13e) s'étendant depuis ladite tête de retenue (4) jusqu'au voisinage de la forme en pointe (6) du fût (5),
lesdites nervures possédant chacune une section triangulaire de manière à présenter une arrête tranchante,
ladite pièce de fixation comportant, de préférence, un nombre total impair de nervures saillantes.

2. Rallonge selon la revendication 1,
**caractérisée en ce que** qu'elle comporte deux nervures saillantes secondaires (13e, 13b) situées dans le prolongement desdites arrêtes (17a, 17b).

3. Rallonge selon l'une quelconque des revendications précédentes,
**caractérisée en ce que** la hauteur desdites nervures saillantes (13a, 13b, 13c, 13d, 13e) par rapport à l'axe du fût (5) diminue graduellement à leur extrémité (14) située au voisinage de la forme en pointe (6) du fût jusqu'à se fondre dans la surface extérieure du fût (5).

4. Rallonge selon l'une quelconque des revendications 1 ou 2,
**caractérisée en ce que** la hauteur des nervures saillantes secondaires (13b, 13c, 13d, 13e) par rapport à l'axe du fût (5) diminue graduellement à leur extrémité (14) située au voisinage de la forme en pointe (6) du fût jusqu'à se fondre dans la surface extérieure du fût (5), la hauteur de la nervure principale (13a) par rapport à l'axe du fût (5) restant constante.

5. Rallonge selon l'une quelconque des revendications 1 à 4,
**caractérisée en ce que** lesdites nervures saillantes secondaires (13b, 13c, 13d, 13e) sont réparties symétriquement par rapport à un plan passant par l'axe du fût (5) et la nervure principale (13a).

6. Rallonge selon l'une quelconque des revendications 1 à 4,
**caractérisée en ce que** la tête de retenue (4) de la pièce de fixation comporte un grand axe (A-A') et **en ce que** :
- lesdites nervures saillantes secondaires (13b, 13c, 13d, 13e) sont réparties symétriquement par rapport à un plan passant par l'axe du fût (5) et ledit grand axe (A-A'),
- ladite nervure principale (13a) est décalée angulairement selon un angle au centre prédéterminé (Z) inférieur à 90° par rapport audit grand axe, dans un plan de section droite du fût (5).

7. Rallonge selon l'une quelconque des revendications 1 à 6,
**caractérisée en ce que** les nervures saillantes secondaires présentent des longueurs différentes les une des autres.

8. Rallonge selon l'une quelconque des revendications précédentes,
**caractérisée en ce que** les nervures saillantes sont rectilignes et disposées le long de génératrices du fût.

9. Rallonge selon l'une quelconque des revendications 1 à 7,
**caractérisée en ce que** les nervures saillantes sont hélicoïdales.

10. Rallonge selon l'une quelconque des revendications précédentes,
**caractérisée en ce que** ladite surface biseautée (16) est une surface plane.

11. Rallonge selon l'une quelconque des revendications 1 à 9,
**caractérisée en ce que** ladite surface (16) formant biseau est une surface concave.

12. Rallonge selon l'une quelconque des revendications 1 à 9,
**caractérisée en ce que** la surface formant (16) biseau est une surface hélicoïdale.

13. Rallonge selon l'une quelconque des revendications précédentes,
**caractérisée en ce que** la forme en pointe (6) du fût est conique.

14. Rallonge selon l'une des revendications 1 à 12,
**caractérisée en ce que** l'extrémité (6) en forme de pointe du fût comprend une portion terminale de fût (18) de diamètre extérieur plus faible et reliée au fût (5) par un épaulement (19).

15. Elément de fixation (1) **caractérisé en ce qu'**il comprend une vis (3) et une rallonge (2) selon l'une des revendications 1 à 14 pour ladite vis, ladite rallonge comportant une tête de retenue (4) qui s'étend sensiblement radialement et munie d'un orifice axial, ladite tête de retenue (4) étant solidaire d'un fût tubulaire (5) de forme sensiblement cylindrique débouchant coaxialement audit orifice, de diamètre intérieur au moins égal à celui de la tête de la vis, ledit fût (5) présentant à une extrémité (6) une forme en pointe qui comprend à proximité de sa pointe un rétrécissement d'alésage de diamètre inférieur à celui de la tête par lequel peut passer la tige de la vis,
la forme en pointe du fût étant taillée en forme de biseau et présentant une surface (16) biseautée bordée par deux arrêtes tranchantes (17a, 17b) convergeant vers un point de convergence situé sur l'extrémité de la forme en pointe du fût (5),
ledit fût comportant en outre sur sa paroi extérieure :
- une nervure saillante principale (13a) qui s'étend depuis la tête de retenue (4) jusqu'au point de convergence des deux arêtes (17a, 17b),
- au moins une nervure saillante secondaire (13b, 13c, 13d, 13e) s'étendant depuis ladite tête de retenue (4) jusqu'au voisinage de la forme en pointe (6) du fût (5),
lesdites nervures possédant chacune une section triangulaire de manière à présenter une arrête tranchante,
ladite pièce de fixation comportant, de préférence, un nombre total impair de nervures saillantes.

16. Système selon la revendication 15,
**caractérisé en ce que** la vis et la rallonge sont pré-montées entre elles.

17. Système selon l'un des revendications 15 et 16,
**caractérisé en ce que** la rallonge est une rallonge selon l'une des caractéristiques des revendications 2 à 14.

## Patentansprüche

1. Verlängerungsstück, das zur Verwendung mit einer Schraube bestimmt ist, umfassend einen Rückhaltekopf (4), der sich im Wesentlichen radial erstreckt und der mit einer axialen Öffnung versehen ist, wobei der Rückhaltekopf (4) mit einem rohrförmigen Schaft (5) von im Wesentlichen zylindrischer Form, der koaxial in die Öffnung mündet, fest verbunden ist, wobei der Schaft (5) an einem Ende (6) eine Spitzen-Form aufweist, die in der Nähe ihrer Spitze eine Borverengung aufweist,
wobei die Spitzen-Form des Schafts in abgeschrägter Form gearbeitet ist und eine Schrägfläche (16) aufweist, die von zwei Schneidabschlüssen (17a, 17b) umrandet ist, die zu einem Konvergenzpunkt zusammenlaufen, der am Ende der Spitzen-Form des Schafts (5) liegt,
**dadurch gekennzeichnet, dass** der Schaft weiterhin auf seiner Außenwand folgendes aufweist:
- eine abstehende Hauptrippe (13a), die sich von Rückhaltekopf (4) bis zum Konvergenzpunkt der zwei Abschlüsse (17a, 17b) erstreckt,
- mindestens eine sekundäre abstehende Rippe (13b, 13c, 13d, 13e), die sich von Rückhaltekopf (4) bis in die Nähe der Spitzen-Form (6) des Schafts (5) erstreckt,
- wobei die Rippen jeweils einen dreieckigen Abschnitt in der Art besitzen, dass sie einen Schneidabschluss aufweisen,
- wobei das Befestigungsstück vorzugsweise eine ungerade Gesamtanzahl an abstehenden Rippen aufweist.

2. Verlängerungsstück nach Anspruch 1,
**dadurch gekennzeichnet, dass** es zwei sekundäre abstehende Rippe (13e, 13b) aufweist, die in Verlängerung der Abschlüsse (17a, 17b) liegen.

3. Verlängerungsstück nach einem der vorangehenden Ansprüche,
**dadurch gekennzeichnet, dass** sich die Höhe der abstehenden Rippen (13a, 13b, 13c, 13d, 13e) bezüglich der Achse des Schafts (5) nach und nach an ihrem Ende (14), das in der Nähe der Spitzen-Form (6) liegt, verringert, bis sie mit der Außenfläche des Schafts (5) zusammenfällt.

4. Verlängerungsstück nach einem der Ansprüche 1 oder 2,
**dadurch gekennzeichnet, dass** sich die Höhe der abstehenden sekundären Rippen (13b, 13c, 13d, 13e) bezüglich der Achse des Schafts (5) nach und nach an ihrem Ende (14), das in der Nähe der Spitzen-Form (6) des Schafts liegt, verringert, bis sie mit der Außenfläche des Schafts (5) zusammenfällt, wobei die Höhe der Hauptrippe (13a) bezüglich der Achse des Schafts (5) konstant bleibt.

5. Verlängerungsstück nach einem der Ansprüche 1 bis 4,
**dadurch gekennzeichnet, dass** die abstehenden sekundären Rippen (13b, 13c, 13d, 13e) bezüglich einer Ebene, die durch die Achse des Schafts (5) und die Hauptrippe (13a) verläuft, symmetrisch verteilt sind.

6. Verlängerungsstück nach einem der Ansprüche 1 bis 4,
**dadurch gekennzeichnet, dass** der Rückhaltekopf (4) des Befestigungselements eine Hauptachse (A-A') aufweist, und dadurch dass:
- die abstehenden sekundären Rippen (13b, 13c, 13d, 13e) bezüglich einer Ebene, die durch die Achse des Schafts (5) und die Hauptachse (A-A') verläuft, symmetrisch verteilt sind,
- die Hauptrippe (13a) winkelmäßig in einem vorbestimmten Winkel (Z) in der Mitte von kleiner als 90° bezüglich der Hauptachse in einer Querschnittsebene des Schafts (5) versetzt ist.

7. Verlängerungsstück nach einem der Ansprüche 1 bis 6,
**dadurch gekennzeichnet, dass** die abstehenden sekundären Rippen voneinander unterschiedliche Längen aufweisen.

8. Verlängerungsstück nach einem der vorangehenden Ansprüche,
**dadurch gekennzeichnet, dass** die abstehenden Rippen geradlinig sind und entlang der Mantellinien des Schafts angeordnet sind.

9. Verlängerungsstück nach einem der Ansprüche 1 bis 7,
**dadurch gekennzeichnet, dass** die abstehenden Rippen schraubenförmig sind.

10. Verlängerungsstück nach einem der vorangehenden Ansprüche,
**dadurch gekennzeichnet, dass** die abgeschrägte Fläche (16) eine ebene Fläche ist.

11. Verlängerungsstück nach einem der Ansprüche 1 bis 9,
**dadurch gekennzeichnet, dass** die Schrägfläche (16) ein konkave Fläche ist.

12. Verlängerungsstück nach einem der Ansprüche 1 bis 9,
**dadurch gekennzeichnet, dass** die Schrägfläche (16) ein schraubenförmige Fläche ist.

13. Verlängerungsstück nach einem der vorangehenden Ansprüche,
**dadurch gekennzeichnet, dass** die Spitzen-Form (6) des Schafts konisch ist.

14. Verlängerungsstück nach einem der Ansprüche 1 bis 12,
**dadurch gekennzeichnet, dass** das spitzenförmige Ende (6) des Schafts einen Endabschnitt des Schafts (18) mit kleineren Durchmesser und über eine Schulter (19) verbunden mit dem Schaft (5) aufweist.

15. Befestigungselement (1), **dadurch gekennzeichnet, dass** es eine Schraube (3) und ein Verlängerungsstück (2) nach einem der Ansprüche 1 bis 14 für die Schraube aufweist, wobei das Verlängerungsstück einen Rückhaltekopf (4), der sich im Wesentlichen radial erstreckt und der mit einer axialen Öffnung versehen ist, aufweist, wobei der Rückhaltekopf (4) mit einem rohrförmigen Schaft (5) von im Wesentlichen zylindrischer Form, der koaxial in die Öffnung einmündet, fest verbunden ist, mit einem Innendurchmesser, der mindestens gleich demjenigen des Kopfs der Schraube ist, wobei der Schaft (5) an einem Ende (6) eine Spitzenform aufweist, die in der Nähe ihrer Spitze eine Borverengung mit einem Durchmesser aufweist, der kleiner ist als derjenige des Kopfs, durch den der Schaft der Schraube hindurchgehen kann,
wobei die Spitzen-Form des Schafts in abgeschrägter Form gearbeitet ist und eine Schrägfläche (16) aufweist, die von zwei Schneidabschlüssen (17a, 17b) umrandet ist, die zu einem Konvergenzpunkt zusammenlaufen, der am Ende der Spitzen-Form des Schafts (5) liegt,
wobei der Schaft weiterhin auf seiner Außenwand folgendes aufweist:
- eine abstehende Hauptrippe (13a), die sich von Rückhaltekopf (4) bis zum Konvergenzpunkt der zwei Abschlüsse (17a, 17b) erstreckt,
- mindestens eine sekundäre abstehende Rippe (13b, 13c, 13d, 13e), die sich von Rückhaltekopf (4) bis in die Nähe der Spitzen-Form (6) des Schafts (5) erstreckt,
- wobei die Rippen jeweils einen dreieckigen Abschnitt in der Art besitzen, dass sie einen Schneidabschluss aufweisen,
- wobei das Befestigungsstück vorzugsweise eine ungerade Gesamtanzahl an abstehenden Rippen aufweist.

16. System nach Anspruch 15,
**dadurch gekennzeichnet, dass** die Schraube und das Verlängerungsstück miteinander vormontiert sind.

17. System nach einem der Ansprüche 15 und 16,
**dadurch gekennzeichnet, dass** das Verlängerungsstück ein Verlängerungsstück nach einem der Merkmale der Ansprüche 2 bis 14 ist.

## Claims

1. Extension intended to be used with a screw, comprising a holding head (4) which extends substantially radially and provided with an axial opening, said holding head (4) being integral with a tubular shank (5) of substantially cylindrical shape ending coaxially to said opening, said shank (5) having at one end (6) a pointed form that comprises in the vicinity of its point a narrowing of the bore,
the pointed form of the shank being shaped into the form of a bevel and having a bevelled surface (16) bordered by two cutting edges (17a, 17b) converging towards a convergence point located on the end of the pointed form of the shank (5),
**characterised in that** said shank further comprises on its outer wall:
- a main projecting rib (13a) that extends from the holding head (4) to the convergence point of the two edges (17a, 17b),
- at least one secondary projecting rib (13b, 13c, 13d, 13e) extending from said holding head (4) to the vicinity of the pointed form (6) of the shank (5),
said ribs each having a triangular section in such a way as to have a cutting edge,
said fixing part comprising, more preferably, a total odd number of projecting ribs.

2. Extension according to claim 1,
**characterised in that** it comprises two secondary projecting ribs (13e, 13b) located in the extension of said edges (17a, 17b).

3. Extension as claimed in any preceding claim,
**characterised in that** the height of said projecting ribs (13a, 13b, 13c, 13d, 13e) with respect to the axis of the shank (5) decreases gradually at their end (14) located in the vicinity of the pointed form (6) of the shank until merging into the outer surface of the shank (5).

4. Extension according to any of claims 1 or 2,
**characterised in that** the height of the secondary projecting ribs (13b, 13c, 13d, 13e) with respect to the axis of the shank (5) decreases gradually at their end (14) located in the vicinity of the pointed form (6) of the shank until merging into the outer surface of the shank (5), with the height of the main rib (13a) with respect to the axis of the shank (5) remaining constant.

5. Extension according to any of claims 1 to 4,
**characterised in that** said secondary projecting ribs (13b, 13c, 13d, 13e) are symmetrically distributed with respect to a plane passing through the axis of the shank (5) and the main rib (13a).

6. Extension according to any of claims 1 to 4,
**characterised in that** the holding head (4) of the fixing part comprises a large axis (A-A') and **in that**:
- said secondary projecting ribs (13b, 13c, 13d, 13e) are symmetrically distributed with respect to a plane passing through the axis of the shank (5) and said large axis (A-A'),
- said main rib (13a) is angularly offset according to an angle at the predetermined centre (Z) less than 90° with respect to said large axis, in a cross-sectional plane of the shank (5).

7. Extension according to any of claims 1 to 6,
**characterised in that** the secondary projecting ribs have lengths that are different from each other.

8. Extension as claimed in any preceding claim, **characterised in that** the projecting ribs are straight and arranged along generating lines of the shank.

9. Extension according to any of claims 1 to 7, **characterised in that** the projecting ribs are helical.

10. Extension as claimed in any preceding claim, **characterised in that** said bevelled surface (16) is a planar surface.

11. Extension according to any of claims 1 to 9,
**characterised in that** said surface (16) forming a bevel is a concave surface.

12. Extension according to any of claims 1 to 9,
**characterised in that** the surface (16) forming a bevel is a helical surface.

13. Extension as claimed in any preceding claim, **characterised in that** the pointed form (6) of the shank is tapered.

14. Extension according to one of claims 1 to 12,
**characterised in that** the end (6) with a pointed form of the shank comprises an end shank portion (18) of a smaller outer diameter and connected to the shank (5) by a shoulder (19).

15. Fixing part (1) **characterised in that** it comprises a screw (3) and an extension (2) according to one of claims 1 to 14, for said screw, said extension comprising a holding head (4) which extends substantially radially and provided with an axial opening, said holding head (4) being integral with a tubular shank (5) of substantially cylindrical shape ending coaxially to said opening, of inner diameter at least equal to that of the head of the screw, said shank (5) having at one end (6) a pointed form that comprises in the vicinity of its point a narrowing of the bore with a diameter less than that of the head through which the shank of the screw can pass,
the pointed form of the shank being shaped into the form of a bevel and having a bevelled surface (16) bordered by two cutting edges (17a, 17b) converging towards a convergence point located on the end of the pointed form of the shank (5),
said shank further comprising on its outer wall:
- a main projecting rib (13a) that extends from the holding head (4) to the convergence point of the two edges (17a, 17b),
- at least one secondary projecting rib (13b, 13c, 13d, 13e) extending from said holding head (4) to the vicinity of the pointed form (6) of the shank (5),
said ribs each having a triangular section in such a way as to have a cutting edge,
said fixing part comprising, more preferably, a total odd number of projecting ribs.

16. System according to claim 15,
**characterised in that** the screw and the extension are pre-mounted between them.

17. System according to one of claims 15 and 16,
**characterised in that** the extension is an extension according to one of the characteristics of claims 2 to 14.
